# EUROPEAN PATENT APPLICATION

(11) **EP 0 637 614 A2**
(43) Date of publication of application: **08.02.1995**
(21) Application number: 94112054.5
(22) Date of filing: 02.08.1994
(51) Int. Cl.: C08L 101/00, C08J 5/04

(54) **Liquid crystal polymer composite material and method for molding the same**

(30) Priority: 03.08.1993 JP 192599/93; 03.08.1993 JP 192601/93
(71) Applicant: Mazda Motor Corporation, Aki-gun Hiroshima-ken (JP)
(72) Inventor: Matsuda, Yushi, Higashihiroshima-shi, Hiroshima-ken (JP); Moriwaki, Kenji, Higashihiroshima-shi, Hiroshima-ken (JP); Toh, Kazuhisa, D-64348 Bad Homburg v.d.H. (DE); Shinomori, Masatoshi, Hatsukaichi-shi, Hiroshima-ken (DE)
(74) Representative: Rucker, Ernst, Dr.

(57) **Abstract**

The present invention is to provide a composite material reinforced by liquid crystal polymer fibers formed by means of spinning molding in place of in-situ liquid crystal polymer composite material.

The liquid crystal polymer composite material which comprises a matrix polymer (M) containing at least a thermoplastic polymer (P) and a reinforcing material (L) containing at least fibers (F) made of a liquid crystal thermoplastic polymer (L100) having a higher liquid crystal transition temperature (Tₜ) than a minimum moldable temperature (Tmm) of the matrix thermoplastic polymer (P) by means of spinning, and the matrix polymer (M) and the reinforcing material (L) are in a composite state by means of molding them at a molding window temperature (Tw) which is more than the minimum moldable temperature (Tmm) and less than the transition temperature (Tt).

## Description

The present invention relates generally to a liquid crystal polymer fiber reinforced thermoplastic composite material and a method for molding the same.

Hitherto, FRP (fiber reinforced plastics) has been well-known. In general, as the reinforcing fiber of FRP, there has been used glass-fibers or carbon-fibers which are not thermoplastic polymer, so that it is difficult to remanufacture used FRP products, resulting in a big recycle problem at the present time.

On the other hand, there is proposed a liquid crystal polymer composite material made from a thermoplastic polymer and a liquid crystal polymer as shown in Japanese Patent Kokai No.320128/1989. The composite material comprises liquid crystal polymer fibers dispersed in the thermoplastic matrix polymer, which are formed by means of in-situ composite molding. It has been found by us as shown in EP 0 524 655 A2 that the liquid crystal composite material can be remanufactured without degrading physical properties substantially below that of the original composite product. Now, hereinafter in the specification, the step of in-situ composite molding means that it is comprised of a step of mixing the thermoplastic polymer and the liquid crystal polymer to adjust a content of the liquid crystal polymer within a determined fiber formable range, a step of heating the mixture up to a temperature more than a liquid transition temperature and a step of melt-extruding it at a determined shearing rate sufficient to make the liquid crystal polymer into fibers in the matrix polymer as shown in EP 0 535 650 A2 and EP 0 566 149 A2.

However, after our sharp researches, it is found that in the case of the composite material manufactured by the in-situ composite molding, the reinforcing effect produced by the liquid crystal polymer fibers is limited to a lower value less than that desired and also the physical properties of the remanufactured product tends to decline gradually with the number of remanufacture.

The present invention has been developed to overcome the above-described disadvantages.

It is accordingly a first objective of the present invention to provide a remanufacturable liquid crystal polymer fiber reinforced thermoplastic (hereinafter referred to as LCPFRTP) composite material provided with physical properties superior to the conventional LCPFRTP composite material manufactured by in-situ composite molding.

A second objective of the present invention is to provide a remanufacturable LCPFRTP composite blank material provided with physical properties superior to the conventional LCPFRTP composite material manufactured by in-situ composite molding.

A third objective of the present invention is to provide a liquid crystal polymer fiber or strand used for reinforcing the thermoplastic matrix polymer.

A fourth objective of the present invention is to provide a method for preparing a LCPFRTP composite material.

A fifth objective of the present invention is to provide a method for preparing a LCPFRTP blank material.

In accomplishing the above and other objectives, according to a first aspect of the present invention, there can be provided a liquid crystal polymer fiber reinforced thermoplastic polymer composite material which comprises a matrix polymer (M) containing at least a thermoplastic polymer (P) and a reinforcing material (L) containing at least fibers (F) made of a liquid crystal thermoplastic polymer (L100) having a higher liquid crystal transition temperature (Tₜ) than a minimum moldable temperature (Tmm) of the matrix thermoplastic polymer (P) and formed by means of spinning, and the matrix polymer (M) and the reinforcing material (L) are in a composite state by means of molding them at a molding window temperature (Tw) which is more than the minimum moldable temperature (Tmm) and less than the transition temperature (Tt).

The matrix polymer (M) used in the present invention substantially comprises one which is known to the art as thermoplastic polymer (P), examples of which may include ABS resin (acrylonitrile-butadiene-styrene copolymer), PS (polystyrene) resin, PC (polycarbonate) resin, PPO (polyphenylene oxide) resin, PO (polyolefin) resin, PE (polyester) resin, PAR (polyarylate) resin, PA (polyamide) resin, mixtures thereof and the like. Preferably there can be used commercially available examples of PC/ABS resin (minimum moldable temperature(Tmm):220°C), PC/PBT(polybutylene terephthalate) resin (Tmm:230°C), m-PPE (modified polyphenylene ether) resin (Tmm:220°C or 260°C), PA-6 (nylon 6) resin (Tmm:215°C), PBT resin (Tmm:230°C), PC resin (Tmm:270°C), ABS resin (Tmm:180°C), PP (polypropylene) resin (Tmm: 176°C), PS resin (Tmm: 170 or 190°C). Further, the matrix polymer (M) may be or contains a liquid crystal composite material (L/M) made from the thermoplastic polymer (P) and/or a thermoplastic polymer (P') compatible with the thermoplastic polymer (P) and the thermoplastic liquid crystal polymer (L100) by means of in-situ composite molding.

On the other hand, the reinforcing material (L) substantially comprises fibers (F) made of the liquid crystal polymer and has a liquid transition temperature (Tt), higher, preferably by 20°C or more, than the minimum moldable temperature of the thermoplastic matrix polymer (P). The reinforcing material (L) may contain a liquid crystal composite material (L/M) made from the thermoplastic polymer (P) and/or a thermoplastic polymer (P') compatible with the thermoplastic polymer (P) and the thermoplastic liquid crystal polymer (L100) by means of in-situ composite molding. The liquid crystal polymer in the present invention is defined as a resin provided with a liquid crystalline property at a melt state, and examples are disclosed in EP 0 535 650 A2. Among them, there can be preferably used a thermoplastic liquid crystal polyester and a thermoplastic liquid crystal polyesteramide such as VECTRA A 950 (liquid crystal transition temperature (Tt): 280°C, available from POLYPLASTIC Co. Ltd.), ECONOL 6000 (Tt:350°C, available from SUMITOMO CHEMICAL Co. Ltd.), ZAIDER (available from JAPAN OIL CHEMISTRY Co. Ltd.).

The liquid crystal polymer in the present invention is formed into fibers by means of spinning molding. The spinning molding is carried out according to a method known to the art. The spinning conditions are as follows.
Resin temperature: 300 - 360 °C
Diameter of Extrusion die hole: 0.001 - 2 mm
Number of Extrusion die: 1 - 2000 holes
Speed of Winding: 30 - 4500 m/min.

The reinforcing fiber material formed by means of spinning has a diameter of 10 to 20 µm, which are cut into a length of 8 - 50 mm and then can be used in a form of fibers. However, in many cases the fibers are preferably interwoven or bound into a strand (S) to have a diameter of 1 to 5 mm.

The reinforcing fibers may be in a form of mat made from chopped strands having a diameter of 1- 5 mm and a length of 8 - 50 mm. Further, the reinforcing fiber material may be used in a form of continuous strands, continuous strand mat or continuous strand clothes or may be used in a mixed form thereof.

In interweaving or binding the reinforcing fibers with a binder, it is preferably the same material as the thermoplastic polymer (P) or a thermoplastic polymer (P') compatible with the thermoplastic polymer (P).

In combination with the reinforcing fiber material, there may be used a liquid crystal composite material (L/M) made from the thermoplastic polymer (P) and/or a thermoplastic polymer (P') compatible with the thermoplastic polymer (P) and the thermoplastic liquid crystal polymer (L100) by means of in-situ composite molding, thereby resulting in high dispersion of the liquid crystal polymer fibers into the matrix and thus a higher content of the liquid crystal polymer in the matrix.

In the case of mixing the chopped strands with matrix polymer chips, it preferably has a length of more than 1mm and less than 25mm. When it is less than 1 mm, it is difficult to adhere the chopped strands with the matrix chips. On the other hand, when it is over 25mm, bridge phenomenon that the chopped strands can not flow out smoothly often happens during a step of mixing them with the matrix chips. The chopped strands preferably have a diameter of more than 1 mm and less than 12.5 mm, because they can not be dispersed sufficiently into a matrix when less than 1mm, while the above bridge phenomenon often happens when over 12.5mm.

Further, according to a second aspect of the present invention, there can be provided a LCPFRTP composite blank material which comprises a blank base material (MS) made of matrix polymer component (M) containing at least a thermoplastic polymer (P) and a reinforcing material (L) containing at least fibers (F) made of a liquid crystal thermoplastic polymer (L100) having a higher liquid crystal transition temperature (Tt) than a minimum moldable temperature (Tmm) of the matrix thermoplastic polymer (P) and formed by means of spinning, and both of the blank base material (MS) and the reinforcing material (L) are in a composite state by means of laminating them in the molding window temperature (Tw).

The blank base material (MS) is preferably a liquid crystal composite material (L/M) made from a thermoplastic polymer (P) and a liquid crystal polymer by means of in-situ composite molding. On the other hand, the reinforcing material (L) is preferably one selected from the group consisting of chopped fibers, chopped strands, a chopped strand mat, continuous strands, a continuous strand mat and a continuous strand cloth, which are made of fibers (F) made of a liquid crystal thermoplastic polymer (L100) having a higher liquid crystal transition temperature (Tt) than a minimum moldable temperature (Tmm) of the matrix thermoplastic polymer (P) and formed by means of spinning.

Furthermore, according to a third aspect of the present invention, there can be provided a method for preparing a liquid crystal polymer composite material from a matrix polymer (M) containing at least a thermoplastic polymer (P) and a thermoplastic liquid crystal polymer (L100) having a liquid crystal transition temperature (Tt) higher than a minimum moldable temperature (Tmm) of the thermoplastic polymer (P), which comprises:
a step of spinning liquid crystal polymer fibers (F) from a liquid crystal polymer (L100),
a step of forming the fibers (F) into a reinforcing material (L) in a form selected from the group consisting of chopped fiber, chopped strand, chopped strand mat, continuous strand, continuous strand mat and continuous strand cloth, and
a step of composite molding the matrix polymer (M) and the reinforcing material (L) into a liquid crystal polymer composite material (L/M) at a molding window temperature (Tw) more than the minimum moldable temperature (Tmm) and less than the transition temperature (Tt).

In an embodiment of the method, the step of composite molding can be carried out by means of mold pressing wherein the fibers (F) made of the thermoplastic liquid crystal polymer (L100) and formed by means of spinning are positioned near the thermoplastic matrix polymer (M) heated up to the molding window temperature (Tw) and the matrix polymer (M) is allowed to flow along the mold surface.

In a further embodiment of the method, the step of composite molding may comprise two steps; a preliminary molding step wherein a blank composite material is made from the thermoplastic polymer (P) and the liquid crystal polymer fibers (F) at the molding window temperature (Tw) and a proper molding step wherein the resulting blank composite material is molded into a product at the molding window temperature (Tw).

Preferably, the step of composite molding may be carried out by means of injection molding wherein a preform made of the liquid crystal polymer fibers (L100F) is set in an injection mold, in which there is injected the thermoplastic polymer (P) heated up to the molding window temperature.

In the practice of the method of the present invention, the starting material used may comprise the thermoplastic polymer (P) and the liquid crystal polymer fibers (F). Alternatively, it may comprise the thermoplastic polymer (P), the liquid crystal polymer fibers (F) and an in-situ composite material (L/M) as the matrix polymer (M) or reinforcing material (L) made from the thermoplastic matrix polymer (P) as a matrix and/or a thermoplastic polymer (P') compatible with the thermoplastic matrix polymer (P) and a thermoplastic liquid crystal polymer (L100).

The method may further comprise a step of crushing a blank composite material into chips or powder, a step of in-situ composite molding the chips or powder of blank composite material, wherein if necessary, a further liquid crystal polymer (L100) and/or thermoplastic polymer (P) are added to the chips or powder to adjust a liquid crystal polymer content of the mixture within a fiber formable range.

The method may also further comprise a step of crushing the composite material comprising the spinned liquid crystal polymer fibers (F) and the thermoplastic polymer (P) into chips or powder, a step of heating the chips or powder up to the molding window temperature (Tw) and a step of molding the heated chips or powder while melting only the powder of matrix polymer (M).

The method may be applied to a remanufacturing method for a used liquid crystal polymer composite material, wherein spinned liquid crystal polymer fibers (F) same as that of the used liquid crystal polymer composite material or different therefrom are added to the used liquid crystal polymer composite material and the mixture is remolded into a liquid crystal polymer composite by in-situ composite molding.

Further, according to a fourth aspect of the present invention, there can be provided a method for preparing a liquid crystal polymer composite blank material, which comprises:
a step of preparing a blank base material (MS),
a step of preparing a reinforcing material (L) from a spinned liquid crystal polymer fibers (F), and
a step of composite molding the blank base material (MS) and the reinforcing material (L) into a composite material (L/M) at a molding window temperature (Tw).

In an preferable method wherein the reinforcing material (L) is in a form of chopped fiber or chopped strand, the step of composite molding may be carried out by a step of dispersing the chopped fibers or strands between a pair of the blank base material (MS) and a step of pressing a pair of the blank base material (MS) to form them into a composite. Alternatively, the step of composite molding is carried out by a step of dispersing the thermoplastic polymer powder and the chopped fibers or strands in a dispersion liquid medium having a specific gravity similar to that of the thermoplastic polymer powder and the chopped fiber or strand, a step of making a sheet of paper from the thermoplastic polymer powder and the chopped fibers or strands in the dispersion liquid medium, a step of heating the sheet or sheets laminated each other up to the molding window temperature (Tw) and pressing them into a blank composite material.

The above and other objectives and features of the present invention will become more apparent from the following description of a preferred embodiment thereof with reference to the accompanying drawings, throughout which like parts are designated by like reference numerals, and wherein:
Fig. 1 is a perspective view of laminating a chopped strand mat (L100M) and a pair of matrix polymer sheets (MS),
Fig.2 is a sectional view of laminating a chopped strand mat (L100M) positioned at both sides of a matrix polymer sheet (MS) heated to a molding window temperature,
Fig.3 is a view showing process of composite molding according to the present invention through a blank material,
Fig.4 is a view showing process of injection composite molding according to the present invention,
Fig. 5 is a perspective view of laminating a chopped strand mat (L 100M) as reinforcing material made of liquid crystal polymer fibers (L100F) and a pair of in-situ composite matrix sheets (L/M),
Fig.6 is a graph showing a variation of Tensile strength or Flowing length ratio depending on content of liquid crystal polymer in the composite,
Fig.7 is a view showing process of injection composite molding through a blank material and its crushed chips,
Fig.8 is a perspective view of laminating a chopped strand mat of liquid crystal polymer fibers (L100M), a pair of in-situ composite matrix sheets (L/M) and a pair of matrix polymer sheet (MS),
Fig.9 is a perspective view of laminating a continuous strand mat made of liquid crystal polymer fibers (L100F) and a pair of in-situ composite matrix sheets (L/M),
Fig.10 is a perspective view of laminating a cloth made of liquid crystal polymer fibers and a pair of in-situ composite matrix sheets (L/M),
Fig.11 is an enlarged internal structure of a composite blank material manufactured according to the present invention,
Fig.12 is a view showing continuous process of composite molding in a case of using chopped fibers or strands as a reinforcing material,
Fig.13 is a view showing continuous process of composite molding in a case of using a chopped strand mat as a reinforcing material,
Fig.14 is a view showing continuous process of composite molding in a case of using a L100 fiber cloth as a reinforcing material,
Fig.15 is a view showing continuous process of paper-making and composite molding in a case of using chopped fibers and strands.

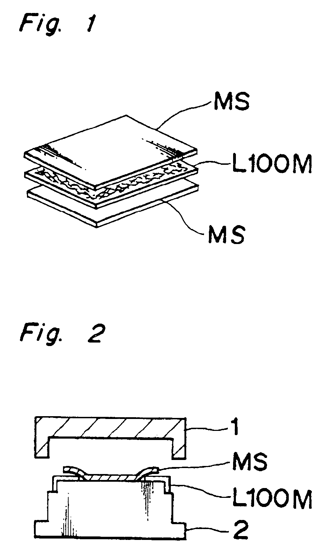

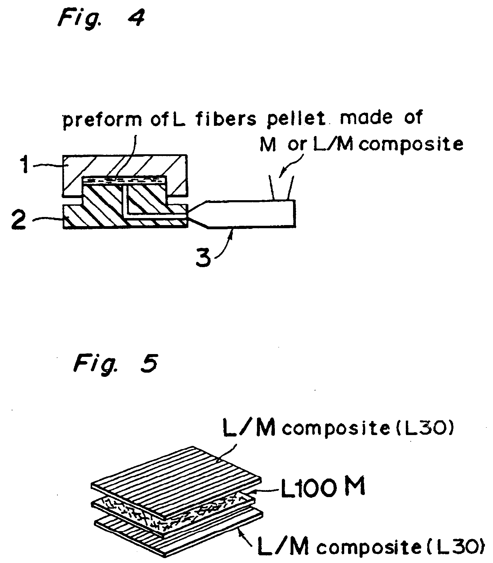

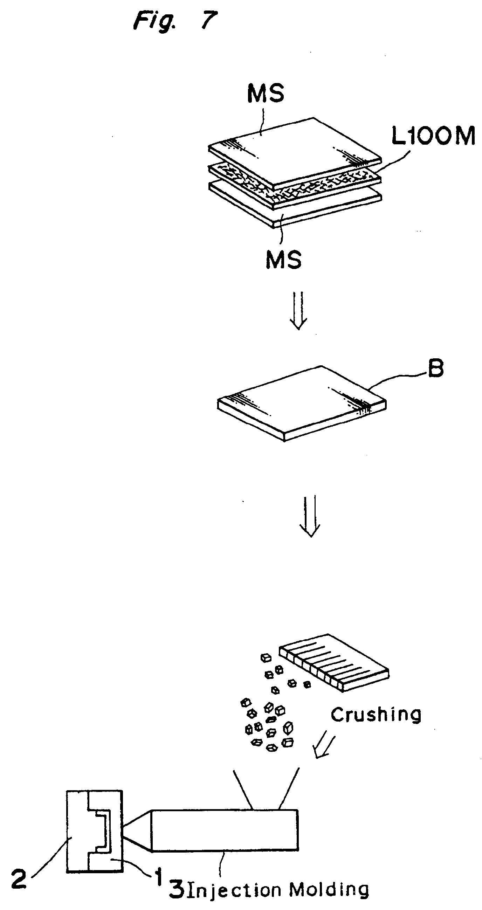

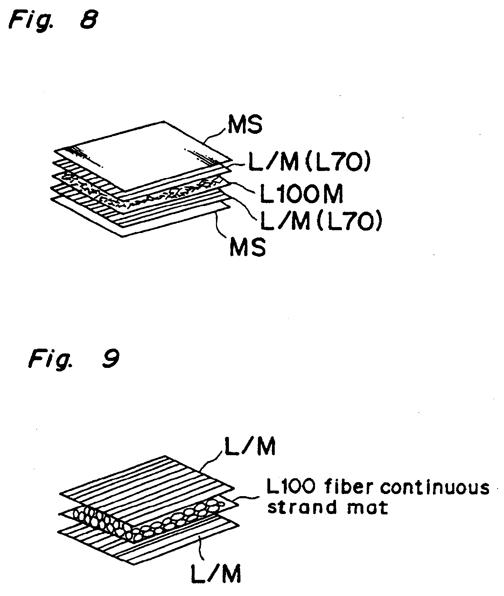

The composite material prepared according to the present invention can be provided in a following form: firstly as shown in Fig.1, 1) a LCPFRTP composite material comprises a chopped strand mat (L100M) formed from the reinforcing fibers made of the liquid crystal polymer by means of spinning and a sheet (MS) of the matrix polymer which are in a composite by laminating and pressing them with each other at a molding window temperature (Tw) more than the minimum moldable temperature (Tmm) and less than the transition temperature (Tt).
2) A second LCPFRTP composite material, as shown in Fig. 5, comprises a chopped strand mat L100M made of fibers L100 and a composite material sheet (L/M) prepared by in-situ composite molding which are in a composite by laminating and pressing them with each other at the molding window temperature (Tw). In the in-situ composite molding, a thermoplastic matrix polymer and a thermoplastic liquid crystal polymer having a liquid crystal transition temperature higher than a minimum moldable temperature of the thermoplastic matrix polymer are melt-extruded at the same time to give a composite material comprising liquid crystal polymer fibers dispersed uniformly in the matrix polymer.
3) A third LCPFRTP composite, as shown in Fig.8, comprises a chopped strand mat L100M made of fibers L100, a composite material sheet (L/M) prepared by in-situ composite molding and a sheet (MS) of the matrix polymer which are in a composite by laminating and pressing them with each other at the molding window temperature (Tw).
4) A fourth LCPFRTP composite material, as shown in Fig.7, can be prepared by a step of providing a same blank material B as the above 1), 2) or 3), a step of crushing the blank material B into chips or powders and a step of injection molding a shaped product from chips or powder.

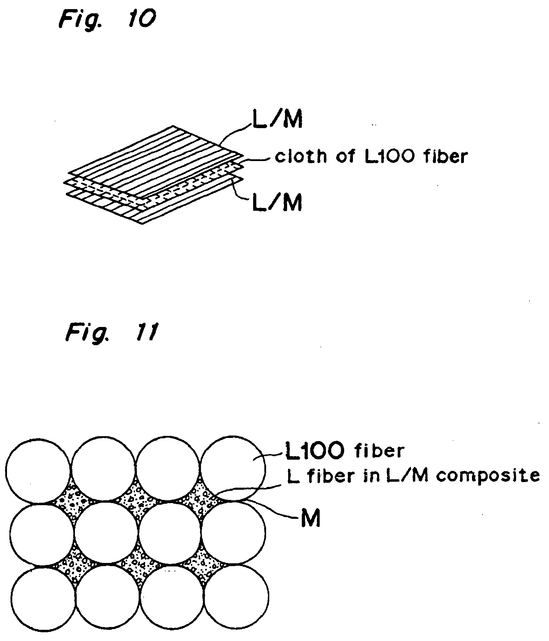

Particularly, the preferred composite blank material prepared according to the present invention can be provided in a following form: firstly as shown in Fig.1, 1) a LCPFRTP composite blank material comprises a chopped strand mat (L100M) formed from the reinforcing fibers made of the liquid crystal polymer by means of spinning and a sheet (MS) of the matrix polymer which are in a composite by laminating and pressing them with each other at a molding window temperature (Tw) more than the minimum moldable temperature (Tmm) and less than the transition temperature (Tt).
2) A second LCPFRTP composite blank material, as shown in Fig. 5, comprises a chopped strand mat L100M made of fibers L100 and a blank base material (MS) made of the composite material sheet (L/M) prepared by in-situ composite molding which are in a composite by laminating and pressing them with each other at the molding window temperature (Tw).
3) A third LCPFRTP composite blank material as shown in Fig.9, comprises a continuous strand mat L100M made of fibers L100 and a blank base material (MS) made of the composite material sheet (L/M) prepared by in-situ composite molding and a sheet (MS) of the matrix polymer which are in a composite by laminating and pressing them with each other at the molding window temperature (Tw).
4) A fourth LCPFRTP composite blank material, as shown in Fig.10, comprises a strand cloth L100C made of fibers L100 and a blank base material (MS) made of the composite material sheet (L/M) prepared by in-situ composite molding and a sheet (MS) of the matrix polymer which are in a composite by laminating and pressing them with each other at the molding window temperature (Tw).

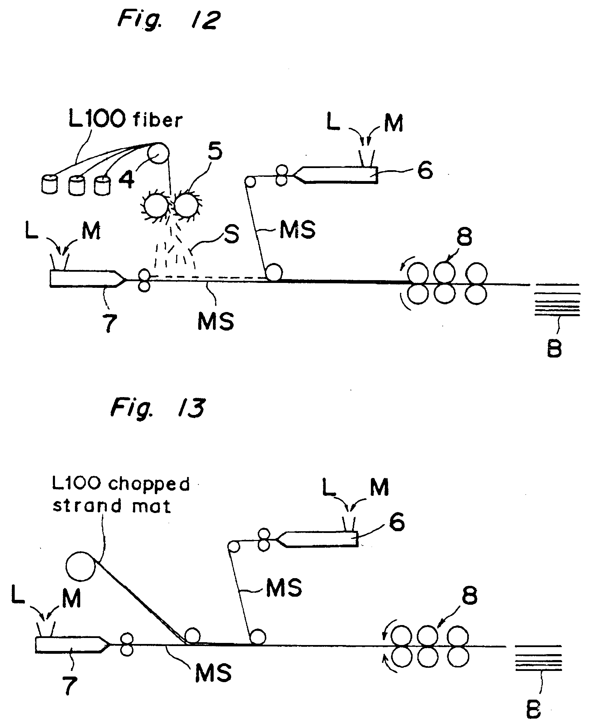

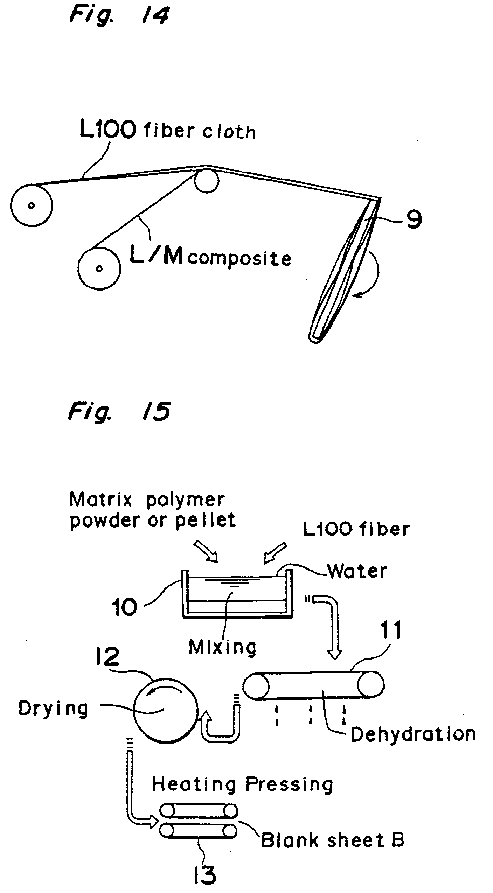

The above LCPFRTP composite material or blank material can be prepared by the following methods.
1) In a case of using chopped strands as the reinforcing material, as shown in Fig.12, a plurality of L100 fibers formed by means of spinning are bound with a binder made of the thermoplastic polymer (P) or a thermoplastic polymer (P') compatible with the thermoplastic polymer (P) by a binding machine 4 to give a strand (S) having a diameter of 1 to 5 mm. The strands are cut into a length of 8 to 50 mm. On the other hand, a pair of blank base material sheets (MS) are formed by melt-extruding apparatuses 6 and 7 from the thermoplastic matrix polymer (M) and the liquid crystal polymer (L). The blank base material sheet (MS) is a composite,material (L/M) wherein the liquid crystal polymer fibers are uniformly dispersed in the matrix polymer (M). Then, the chopped strands (S) are dispersed between a pair of the blank base material sheets (MS) and pressed by a plurality of pressing rollers 8 to give a blank composite material (B) comprising the chopped strands (S) and the blank base material (MS).
2) Alternatively, as shown in Fig.15, the chopped fibers or strands and the thermoplastic matrix polymer powder or pellets are mixed in a mixing bath 10 of dispersion liquid medium such as water having a specific gravity similar to the fibers and the powder. The dispersing mixture is paper-made by a dehydration apparatus 11 provided with an endless belt to give a paper made of the liquid crystal polymer fibers and the thermoplastic matrix polymer powder. The composite paper is heated and dried on a surface of a drying drum 12 and the papers are laminated and heat-pressed at the molding window temperature (Tw) by a pair of belt-like pressing means 13 to give the composite blank material sheet (B).
3) In a case of using the chopped strand mat as a reinforcing material, as shown in Fig.13, L100 chopped strand mat is inserted and sandwiched between a pair of the blank material sheet (L/M) provided from the melt-extruding apparatuses 6 and 7. The sandwiched mat and sheets (MS) are, heat-pressed at a molding window temperature (Tw) by means of pressing rollers 8 to give the composite blank material (B).
4) In a case of using a blank base material made of the composite material (L/M), which is formed into a thin sheet due to extrusion with a higher shearing in order to make the liquid crystal polymer into fibers to a higher extent, as shown in Fig. 14, the thin blank base sheet (L/M) and the reinforcing material such as chopped strand mat, continuous strand mat or cloth are wound on a mandrel 9 and heat-pressed at both sides of the mandrel 9 at a molding window temperature (Tw) to give the blank material having a desired thickness. Among them, the continuous strand cloth is preferred since it has a sufficient tension resistance on winding.

The molding window temperature (Tw) is in a range more than the minimum moldable temperature (Tmm) of the thermoplastic matrix polymer and less than the liquid crystal transition temperature (Tt). Therefore, the composite materials are produced without damage or degradation of the reinforcing fiber or strand due to heat of molding.

According to the present invention, the reinforcing fiber made of the liquid crystal polymer may be formed by means of spinning molding known to the art as a spinning method used for synthetic fibers to have a diameter of 10 to 20 µm, which is about 10 times as large as that of fibers formed in a matrix by means of in-situ composite molding, thereby resulting in improved physical properties of product manufactured by a press molding or another molding by use of screw means such as injection molding or blow molding, due to little shearing influence and thus lower damage against the reinforcing fiber on molding. As seen from Table 1, the physical properties obtained according to the present invention are superior to that obtained by in-situ composite molding.

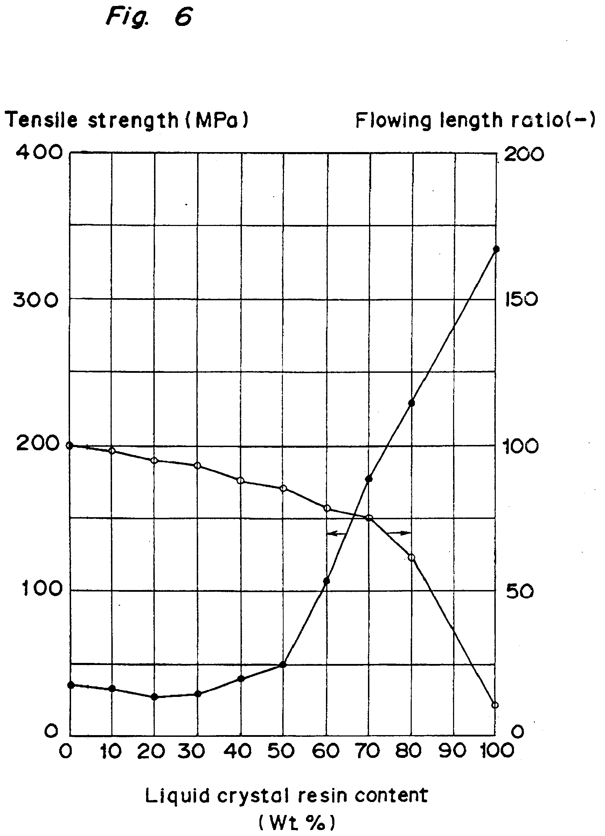

For example, even if the blank material according to the present invention would be press-molded by a pair of upper mold 1 and lower mold 2 as long as the blank material is kept at the molding window temperature (Tmm < Tw < Tt), the reinforcing fibers are not damaged. Particularly,when the blank material is a LCPFRTP composite material (L/M) prepared by means of in-situ composite molding, as shown in Fig.11, in-situ molded micro fibers of the composite material (L/M) are filled in spaces between spinned fibers or strands (L100F) and both of the micro L fibers and the macro fibers (L100F) are combined with the thermoplastic polymer (M), thereby resulting in improved reinforcing effect. In a case of nylon-6 matrix polymer wherein the fiber formable range of the liquid crystal polymer by means of in-situ composite molding is in a high level of 40 to 80 wt.%, preferably 50 to 70 wt.% as shown in Fig.6, according to the present invention there can be provided a composite material having a sufficient strength even if the liquid crystal polymer content is as low as 20 wt.% since the spinned liquid crystal polymer fibers can make the composite material to be reinforced.

According to an embodiment of the method as shown in Fig.2, the step of composite molding can be carried out by means of mold pressing. The fibers (F) made of the thermoplastic liquid crystal polymer (L100) are positioned near the thermoplastic matrix polymer (M) heated up to the molding window temperature (Tw) and the matrix polymer (M) is allowed to flow along the surface of the lower mold 2 by pressing the upper mold 1. Thereby, since the reinforcing material can be molded along the mold surface, it is easy to produce a desired construction.

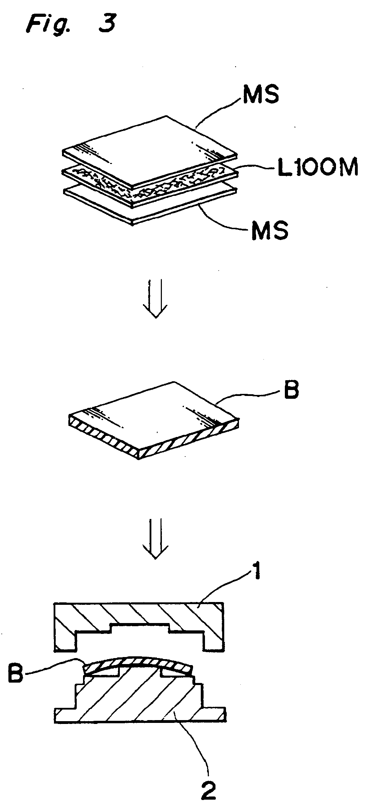

According to a further embodiment of the method as shown in Fig.3, the step of composite molding may comprises two steps; at the preliminary molding step, a blank composite material (B) is made from the thermoplastic polymer (P) and the liquid crystal polymer fibers (F) at the molding window temperature (Tw) and at a proper molding step, the resulting blank composite material is molded into a product at the molding window temperature (Tw). Thereby, it is easy to mold a desired product due to improved handling the blank material.

According to a further embodiment of the method as shown in Fig. 4 step of composite molding may be carried out by means of injection molding wherein a preform (P) made of the liquid crystal polymer fibers (L100F) is set in injection molds 1 and 2 and then the thermoplastic polymer (P) heated up to the molding window temperature is injected into the molds 1 and 2. Thereby, heating time of the reinforcing material by means of melt matrix polymer becomes shorter as possible, resulting in effectively preventing the reinforcing fibers from breaking. In the injection molding method, the in-situ composite material may be used in addition to the thermoplastic polymer (P) and the liquid crystal polymer fibers (F).

In the in-situ composite molding method after crushing the composite blank material, adjusting the liquid crystal polymer content within a fiber-formable range may be carried out by addition of the liquid crystal polymer and/or the thermoplastic matrix polymer. For example, as shown in Fig.5, in a case of using the L/M composite sheet containing 30 wt.% of liquid crystal polymer and the chopped strand mat (L100M) to manufacture a composite material containing 30 wt.% of liquid crystal polymer, it is necessary to add a determined amount of the thermoplastic matrix polymer. On the other hand, as shown in Fig. 8, in a case of using the matrix polymer sheet (MS), the L/M composite sheet containing 70 wt.% of liquid crystal polymer and the chopped strand mat (L100M) to manufacture a composite material containing 50 wt.% of liquid crystal polymer, it is necessary to add a determined amount of the liquid crystal polymer. The fiber formable range of the liquid crystal polymer varies depending on the kind of the thermoplastic matrix polymer as shown in EP 0 535 650 A2. In case of polyamide matrix polymer, the preferable content range is 40 to 80 wt.%. In case of ABS resin, 30 to 75 wt.%. In case of PC/ABS resin, 3 to 70 wt.%. In case of PC/PBT resin, 2 to 60 wt.%. In case of PPO/PA6, 3 to 65 wt.%. In case of m-PPO resin, 3 to 60 wt.%. In case of polypropylene, 2 to 70 wt.%. In case of polycarbonate resin, 3 to 70 wt.%. In case of PBT resin, 10 to 70 wt.%.

In the remanufacturing method for used composite material, the reinforcing fibers or strands in the used composite material can be regenerated by in-situ composite molding. Preferably, fresh reinforcing fibers made of the same or different of the liquid crystal polymer in the used composite material may be added in order to improve the physical properties of regenerated products.

### Example 1

Liquid crystal resin (VECTRA A950, Tt:280°C, available from POLYPLASTIC Co Ltd) was processed by a fiber spinning technique to form fibers of about 0.01 mm in diameter, which fibers were subsequently cut to about 25 mm in length to provide chopped fibers of L100 fibrous material.

88 parts by weight of chips (3 mm in diameter and also in length) of polypropylene resin (NOBLENE D501, Tmm: 176°C, available from SUMITOMO CHEMICAL Co., Ltd.) and 12 parts by weight of the chopped fibers of L100 fibrous material were charged into a kneader (DS3-75MWA, available from MORIYAMA SEISAKUSHO Co., Ltd.) and were mixed at 200°C for 15 minutes and the resultant mixture was press-molded under surface pressure of 200 kgf/cm² by the use of a press molding machine (Model FMP1-600S, available from Kawasaki Yuko Kabushiki Kaisha) to provide a molded plate. Testpieces, 12.7 x 100 mm in size, were cut from the resultant molded plate and were subjected to a series of bending tests, results of which are tabulated in Table 1.

On the other hand, without employing the L100 fibrous material, comparative testpieces similar in size to those described above were prepared from a molded pate of polypropylene which is the matrix resin referred to herein-before and were tested in a similar manner. Results of test of the comparative testpieces are also tabulated in Table 1 under Comparison 1.

Again, using the above described matrix resin and the liquid crystal resin, L/M composite material containing 60 wt% of the liquid crystal resin was manufactured by means of an in-situ molding technique. After the L/M composite material was then adjusted to give 12 wt% content of the mixture of the matrix resin and the liquid crystal, similar testpieces were prepared in a similar manner and were subjected to a series of similar bending tests, results of which are tabulated in Table 1 under Comparison 2.

**Table 1**

| Material | Bending Strength (MPa) | Flexural Modulus (GPa) |
|---|---|---|
| Comparison 1 | 33 | 1.1 |
| Comparison 2 | 37 | 1.5 |
| Example 1 | 41 | 1.8 |

### Example 2

Preform was prepared using L100 fibrous material as in Example 1, which preform was set in a mold assembly of a structure shown in Fig. 4 in a quantity which would permit the eventually resulting molding to have 12 wt% of liquid crystal. Thereafter, matrix resin (D501, the same as in Example 1) was injected into the mold assembly to provide the molding. The temperature employed for the molding was 200°C.

Since the L100 fibrous material lends itself to position adjacent a surface region of the molding, the bending characteristic could be increased considerably as shown in Table 2 below. Also, since the L100 fibrous material has a relatively greater fiber length, the resistance to impacts can be increased considerably.

**Table 2**

| | Bending Strength | Flexural Modulus | Notched Izod Impact Strength |
|---|---|---|---|
| Example 2 | 63 MPa | 3.7 GPa | 42.7 kJ/m² |

### Example 3

Using the same L100 fibrous material as that in Example 1, a blank material was molded as shown in Fig. 7 so as to have 10 wt% of liquid crystal, which blank material was subsequently pulverized to produce pellets. The pellets were thereafter molded at 180°C in an injection molding machine to produce the molding of the present invention. The matrix resin used was polystyrene (ESBRIGHT 9M, available from SHOWA DENKO Co., Ltd.).

For comparison purpose, L/M composite material containing 10 wt% of liquid crystal was prepared by the use of an in-situ molding technique similar to that used to prepare Comparison 2 and was then molded in an injection molding machine to produce a molding of Comparison 3.

The bending characteristic and the impact resistance of these moldings have been measured to be as shown in Table 3.

**Table 3**

| | Bending Strength | Flexural Modulus | Notched Izod Impact Strength |
|---|---|---|---|
| Example 3 | 88 MPa | 3.9 GPa | 5.1 kJ/m² |
| Comparison 3 | 85 MPa | 3.6 GPa | 3.6 kJ/m² |

Bending Test: ASTM D790
Izod Impact Test: ASTM D256
Tensile Test: Measurement was carried out according to a method substantially stipulated in ASTM D638,
Extrusion Molding (Preparation of L/M Material): Dual-axis Extruder (BT-30-S2-36-L, available from PLASTIC TECHNOLOGY RESEARCH Co., Ltd.)
Molding Temperature: 290°C. (with 1500 s⁻¹ in apparent shearing rate in dies)
Injection Molding: IS-220EN-SY (available from TOSHIBA KIKAI Co.,Ltd.)
Grinder: VBC-360 (available from HORAI Co., Ltd.)

### Example 4

L/M compound material prepared from a mixture of a chopped strand mat, containing L100 fibers cut to 8mm in fiber length as in Example 1, polypropylene resin (D501) and liquid crystal resin (A950) and adjusted to have a content of 20 wt% of liquid crystal was cut to 3 mm and was then press-molded to provide L/M compound plates. The L/M compound plates were laminated so that the resultant laminate contains 30 w% of liquid crystal in total content, followed by a press-molding to provide samples. The samples when tested gave the following results as tabulated in Table 4.

**Table 4**

| | Bending Strength | Flexural Modulus | Notched Izod Impact Strength |
|---|---|---|---|
| Example 4 | 62 MPa | 2.6 GPa | 13.4 kJ/m² |
| Comparison 4 | 59 MPa | 2.4 GPa | 5.7 kJ/m² |

### Example 5

The L/M compound plates prepared in Example 4 were pulverized and added with matrix resin so that the resultant L/M compound material contains 20 wt% of liquid crystal. This resultant L/M compound material was cut to 3 mm in size and was then press-molded to provide L/M compound plates. Using this L/M compound plates and the chopped strand mat of L100 fibrous material were molded in a manner as in Example 4 to provide samples. The samples when tested gave the following results as tabulated in Table 5.

**Table 5**

| | Bending Strength | Flexural Modulus | Notched Izod Impact Strength |
|---|---|---|---|
| Example 5 | 60 MPa | 2.5 GPa | 12.8 kJ/m² |

The Table 5 makes it clear that, if the content of the liquid crystal resin remains equal, the compound material prepared by the use of the L100 fibrous material is excellent in respect of bending strength and flexural modulus.

### Example 6

Using a fiber spinning method, liquid crystal resin (VECTRA A950, Tt: 280°C) was formed into fibers of about 0.01 mm in diameter and the fibers so formed were bonded together by the use of a binder, a hot-melt binding agent of polyolefine resin (HM320, available from CEMEDAIN Co.,Ltd.), to provide fiber bundles each being about 3 mm in diameter and made up of 30,000 fibers. The resultant fiber bundles were woven to provide a L100 strand cloth.

On the other hand, 30 wt% of the liquid crystal resin was mixed with chips (3 × 3 mm in size) of polypropylene resin (D501 same as above) and the resultant mixture was molded at a molding temperature of 290°C in an extrusion molding machine (BT-30-S2) to produce L/M compound sheets of 1 mm in thickness which are used as blank base materials MS.

Thereafter, the L100 strand cloth referred to above was placed in between two blank base materials MS and was then press-molded at 200°C under surface pressure of 200 kgf/cm² in a press-molding machine to provide a blank material B which was subsequently press-molded under surface pressure of 200 kgf/cm² in a press-molding machine (FMP1-600S), thereby completing a liquid crystal resin compound material.

### Example 7

Using liquid crystal resin (VECTRA A950), strands, each 0.01 mm in diameter, were formed by the use of a fiber spinning method and were subsequently coated with nylon resin (HM-371, available from CEMEDAIN Co.,Ltd.) by the use of a compatible bonding agent containing 50 wt% of epoxy resin. The coated strands were thereafter twisted to provide a fiber bundle of 3 mm in diameter, which bundle was then cut to about 2.0 mm in length to thereby provide L100 chopped strands.

On the other hand, a mixture of 60 wt% of the liquid crystal resin with nylon-6 resin (1036B, UBE KOSAN Co.,Ltd.) was charged into and molded at 290°C in an extrusion molding machine (BT-30-S32) to provide L/M composite sheets of 1 mm in thickness which were used as blank base materials. The L100 chopped strand mat referred to above was placed in between the two blank base materials and was then press-molded at 235°C under surface pressure of 200 kgf/cm² in a press molding machine (FMP1-600S) to thereby complete a blank material.

### Example 8

30,000 strands of L100 fibers similar to those in Example 6 were woven to provide L100 strand cloth.

On the other hand, using a dual-axis extruder machine, a mixture of 40 wt% of nylon-6 resin (1030B), 60 wt% of liquid crystal resin (VECTRA A950) and 2.5 parts by weight of epoxy resin (EPICRON 7050, available from DAINIPPON INK CHEMICAL Co.,Ltd.) was extruded to produce films of L/M compound material.

The L100 strand cloth and the L/M compound films were laminated so that the content of liquid crystal in the resultant laminate is 70 wt%, and the resultant laminate was press-molded at a molding temperature of 250°C under surface pressure of 300 kgf/cm². The resultant plate was cut to provide testpieces which were subsequently measured as to tensile strength. The measurement indicated 318 MPa.

For comparison purpose, a laminate of L/M compound films containing 70 wt% of liquid crystal was press-molded, but the films had failed to fusion-bond together. No plate was obtained, accordingly.

### Example 9

While a stainless steal mesh was sunk in a water bath, a mixture of L100 fibers, cut to 8 mm in length, and a mass of pulverized polystyrene resin (9M) was charged into the water bath in a quantity sufficient to permit the mixture to contain 10 wt% of liquid crystal. The mixture within the water bath was mixed and was then allowed to stand. Thereafter, the stainless steel mesh was removed out of the water bath together with the mixture resting thereon, and the mixture was then spread in the form of a sheet, followed by drying in an oven. After the drying, the mixture was heated at 200°C to give a heated sheet which was then press-molded to provide a blank material.

Although using L100 fibers cut to 1 mm in length a similar method had been attempted, the fibers were not entangled sufficiently and could therefore not be filtered.

Measurement of physical characteristics of this blank material indicated results substantially similar to those in Example 3, particularly as shown in the following table.

| | Bending Strength | Flexural Modulus | Notched Izod Impact Strength |
|---|---|---|---|
| Example 9 | 89 MPa | 3.8 GPa | 5.0 kJ/m² |

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

1. A liquid crystal polymer composite material which comprises a matrix polymer (M) containing at least a thermoplastic polymer (P) and a reinforcing material (L) containing at least fibers (F) made of a liquid crystal thermoplastic polymer (L100) having a higher liquid crystal transition temperature (Tₜ) than a minimum moldable temperature (Tmm) of the matrix thermoplastic polymer (P) by means of spinning, and the matrix polymer (M) and the reinforcing material (L) are in a composite state by means of molding them at a molding window temperature (Tw) which is more than the minimum moldable temperature (Tmm) and less than the transition temperature (Tt).

2. The liquid crystal composite material according to claim 1, which comprises a blank base material (MS) made of the matrix polymer component (M) containing at least the thermoplastic polymer (P).

3. The liquid crystal polymer composite material according to claim 1 or 2, wherein the matrix polymer (M) contains a liquid crystal composite material (L/M) made from the thermoplastic polymer (P) and/or a thermoplastic polymer (P') compatible with the thermoplastic polymer (P) and the thermoplastic liquid crystal polymer (L100) by means of in-situ composite molding.

4. The liquid crystal polymer composite material according to claim 1 or 2, wherein the reinforcing material (L) contains a liquid crystal composite material (L/M) made from the thermoplastic polymer (P) and/or a thermoplastic polymer (P') compatible with the thermoplastic polymer (P) and the thermoplastic liquid crystal polymer (L100) by means of in-situ composite molding.

5. The liquid crystal polymer composite material according to claim 4, wherein the blank base material (MS) is a liquid crystal composite material (L/M) made from a thermoplastic polymer (P) and a thermoplastic liquid crystal polymer (L100) by means of in-situ composite molding while the reinforcing material (L) is one selected from the group consisting of chopped fiber, chopped strand, chopped strand mat, continuous strand, continuous strand mat and continuous strand cloth, which are made of fibers (F) made of a liquid crystal thermoplastic polymer (L100) having a higher liquid crystal transition temperature (Tt) than a minimum moldable temperature (Tmm) of the matrix thermoplastic polymer (P) and formed by means of spinning, at least both two layers of the blank base material (MS) and the reinforcing material (L) being in a composite state by means of laminating them at a molding window temperature (Tw) more than the minimum moldable temperature (Tmm) and less than the transition temperature (Tt).

6. The liquid crystal polymer composite material according to anyone of claims 1 to 5, which is in a form of small chip made from the resulting composite material by means of cutting.

7. A method for preparing a liquid crystal polymer composite material from a matrix polymer (M) containing at least a thermoplastic polymer (P) and a thermoplastic liquid crystal polymer (L100) having a liquid crystal transition temperature (Tt) higher than a minimum moldable temperature (Tmm) of the thermoplastic polymer (P), which comprises:
a step of spinning liquid crystal polymer fibers (F) from a liquid crystal polymer (L100),
a step of forming the fibers (F) into a reinforcing material (L),
a step of preparing a blank base material (MS) from the matrix polymer (M),
a step of composite molding the blank base material (MS) and the reinforcing material (L) into a composite material (L/M) at a molding window temperature (Tw) more than the minimum moldable temperature (Tmm) and less than the transition temperature (Tt).

8. The method for preparing a liquid crystal polymer composite material according to claim 7, wherein the blank base material (MS) is a liquid crystal composite material made by in-situ composite molding from a thermoplastic polymer, which is same as or different from but compatible with the thermoplastic polymer (P) and a liquid crystal polymer same as or different from the liquid crystal polymer (L100).

9. The method for preparing a liquid crystal polymer composite material according to claims 7 or 8, wherein the reinforcing material (L) is the fibers (F) in a form selected from the group consisting of chopped fiber, chopped strand, chopped strand mat, continuous strand, continuous strand mat and continuous strand cloth.

10. The method for preparing a liquid crystal polymer composite material according to anyone of claims 7 to 9, the step of composite molding is carried out by means of mold pressing wherein the reinforcing material (L) is positioned near the blank base material (MS) heated up to the molding window temperature (Tw) and the matrix polymer (M) of the blank base material (MS) is allowed to flow along the mold surface.

11. The method for preparing a liquid crystal polymer composite material according to anyone of claims 7 to 10, the step of composite molding comprises two steps; a preliminary molding step wherein a blank composite material is made from the thermoplastic polymer (P) and the liquid crystal polymer fibers (F) at a molding window temperature and a proper molding step wherein the resulting blank composite material is molded into a product at the molding window temperature (Tw).

12. The method for preparing a liquid crystal polymer composite material according to anyone of claims 7 to 11, the step of composite molding is carried out by means of injection molding wherein a preform containing the liquid crystal polymer fibers (F) is set in an injection mold, in which there is injected the thermoplastic polymer (P) heated up to the molding window temperature (Tw).

13. The method for preparing a liquid crystal polymer composite material according to anyone of claims 7 to 12, the step of composite molding is carried out by, in addition to the thermoplastic polymer (P) and the liquid crystal polymer fibers (F), using an in-situ composite material (L/M) as the matrix polymer (M) or reinforcing material (L) which are made from the thermoplastic matrix polymer (P) and/or a thermoplastic polymer (P') compatible with the thermoplastic matrix polymer (P) and a thermoplastic liquid crystal polymer (L100).

14. The method for preparing a liquid crystal polymer composite material according to anyone of claims 7 to 13, wherein the blank base material is a sheet of liquid crystal polymer composite material (L/M) made by in-situ composite molding from a thermoplastic polymer, which is same as or different from but compatible with the thermoplastic polymer (P) and a liquid crystal polymer same as or different from the liquid crystal polymer (L100), while the reinforcing material (L) is a sheet or the like of the fibers (F) such as a chopped strand mat, continuous strands, a continuous strand mat and a continuous strand cloth, both sheets of the blank base material (MS) and the reinforcing material (L) being wounded around a mandrel while the blank base material being extended in an extrusion direction.

15. The method for preparing a liquid crystal polymer composite material according to anyone of claims 7 to 14, wherein the reinforcing material (L) is in a form of chopped fiber or chopped strand, the step of composite molding is carried out by a step of dispersing the chopped fibers or strands between a pair of the blank base material (MS) and a step of pressing a pair of the blank base material (MS) to form them into a composite.

16. The method for preparing a liquid crystal polymer composite material according to anyone of claims 7 to 15, wherein the reinforcing material (L) is in a form of chopped fiber or chopped strand, the step of composite molding is carried out by a step of dispersing the thermoplastic polymer powder for forming the blank base material and the chopped fibers or strands in a dispersion liquid medium having a specific gravity similar to that of the thermoplastic polymer powder and the chopped fiber or strand, a step of making a sheet of paper from the thermoplastic polymer powder and the chopped fibers or strands in the dispersion liquid medium, a step of heating the sheet or sheets laminated with each other up to the molding window temperature (Tw) and pressing them into a blank composite material.

17. The method for preparing a liquid crystal polymer composite material according to any one of claims 7 to 16, which further comprises a step of crushing a blank composite material into chips or powder, a step of in-situ composite molding the chips or powder of blank composite material, wherein if necessary, a further liquid crystal polymer (L100) and/or thermoplastic polymer (P) are added to the chips or powder to adjust a liquid crystal polymer content of the mixture within a fiber formable range.

18. The method for preparing a liquid crystal polymer composite material according to any one of claims 7 to 16, which further comprises a step of crushing the composite material comprising the spinned liquid crystal polymer fibers (F) and the thermoplastic polymer (P) into chips or powder, a step of heating the chips or powder up to the molding window temperature (Tw) and a step of molding the heated chips or powder while melting only the powder of matrix polymer (M).

19. The method for preparing a liquid crystal polymer composite material according to any one of claims 7 to 18, which is applied to a remolding method for a used liquid crystal polymer composite material, wherein spinned liquid crystal polymer fibers (F) same as that of the used liquid crystal polymer composite material or different therefrom are added to the used liquid crystal polymer composite material and the mixture is remolded into a liquid crystal polymer composite by in-situ composite molding.

20. The method for preparing a liquid crystal polymer composite material according to claim 19, which is applied to a remolding method for a used liquid crystal polymer composite material, wherein a thermoplastic polymer same as or different from but compatible with the matrix polymer of the used liquid crystal polymer composite material are added to the used liquid crystal polymer composite material and the mixture is remolded into a liquid crystal polymer composite by in-situ composite molding.

21. A reinforcing material which is in a form of fibers (F) made from a liquid crystal thermoplastic polymer (L100) having a higher liquid crystal transition temperature (Tt) than a minimum moldable temperature (Tmm) of a thermoplastic polymer (P) to be formed into a composite with the liquid crystal polymer (L100), the fibers having a diameter of 10 to 20 µm formed by means of spinning.

22. The reinforcing material according to claim 21 which is in a form of strand made from the fibers (F) prepared according to claim 9 by means of binding them with a thermoplastic polymer (P) and/or a thermoplastic polymer (P') compatible with the thermoplastic polymer (P) as a binder to have a diameter of 1 to 5 mm.
